# EUROPÄISCHE PATENTSCHRIFT

(11) **EP 0 457 261 B1**
(45) Veröffentlichungstag und Bekanntmachung des Hinweises auf die Patenterteilung: **10.03.1993**
(21) Anmeldenummer: 91107766.7
(22) Anmeldetag: 14.05.1991
(51) Int. Cl.: C02F 7/00, C02F 1/72, C02F 9/00

(54) **Einrichtung zur Reinigung von beispielsweise mit Schadstoffen belastetem Grundwasser**
Apparatus for purification, for example of contaminated groundwater
Dispositif de la purification, par exemple de l'eau souterraine contaminée

(30) Priorität: 16.05.1990 DE 9005565 U; 20.12.1990 DE 4040820
(43) Veröffentlichungstag der Anmeldung: 21.11.1991
(73) Patentinhaber: TEGEO Tegtmeyer Geophysik GmbH, D-29227 Celle (DE)
(72) Erfinder: Frese, Hermann, D-28857 Syke (DE)
(74) Vertreter: Einsel, Martin, Dipl.-Phys.

(56) Entgegenhaltungen:
- EP-A- 0 418 572
- DD-A- 270 826
- DE-U- 8 610 203
- GB-A- 1 393 028

## Beschreibung

Die Erfindung betrifft eine Einrichtung zur Reinigung von beispielsweise mit Schadstoffen belastetem Grundwasser, unter Verwendung von Luft oder anderen Gasen sowie eines bis in den Bereich des Grundwassers vorgetriebenen Rohrs.

Es ist bekannt, daß das Grundwasser im Erdreich im Bereich zwischen der Ackersohle, das ist die Erdoberfläche, und der Wasserleitersohle, das ist eine für das Grundwasser im wesentlichen undurchlässige Schicht, mit Schadstoffen, z.B. Chlorkohlenwasserstoffen (CKW), belastet sein kann. Solche Belastungen befinden sich beispielsweise in Gegenden mit alten Deponien, Fabriken oder dgl. Bei einem solchen schadstoffbelasteten Grundwasser besteht die Gefahr, daß die Schadstoffe im Laufe der Jahre in das für die Trinkwassergewinnung so wichtige Tiefenwasser gelangen.

Verschiedene Vorschläge sind bereits zur Reinigung des schadstoffbelastenen Grundwasser gemacht worden. Beispielsweise wird die zu reinigende Flüssigkeit über Rieselkörper geleitet, die in einem Frischluft-Gegenstrom liegen, oder das Wasser wird über mehrere Kaskaden geleitet, in deren Bereich Druckluft in das Wasser eingepreßt wird.

In der DE 38 09 600 A1 wird ferner vorgeschlagen, das Grundwasser zunächst dem Boden zu entnehmen und in einem oberirdischen Reaktor chemisch zu oxidieren.

Das mit Sauerstoff angereicherte Grundwasser soll danach in den Boden zurückgeführt werden. Die nachveröffentlichte DE 38 42 740 A1 schlägt vor, eine Reinigungsstufe unterhalb der Geländeoberkante einzurichten, das verunreinigte Grundwasser hochzupumpen und über diese Reinigungsstufe fließen zu lassen. Diese bekannten Vorrichtungen und Verfahren erfordern jeweils eine Entnahme bzw. Fastentnahme des Grundwassers aus dem Brunnen. In speziellen Reaktoren, Reinigungsstufen oder dergleichen wird dann das Grundwasser gereinigt und wieder in den Boden zurückgeführt. Diese Maßnahmen sind häufig nicht effektiv. Aus der DD 270 826 A3 ist eine Anordnung zum Eintragen dosierfähiger Medien in Wasser bekannt. Als dosierender Stoff ist dabei Luft oder Chemikalien vorgesehen. Dabei ist zwingend das Vorhandensein einer Brunnenpumpe vorausgesetzt, in deren Ansaugbereich das Medium eingeführt wird. Zur Grundwasserreinigung ist eine solche Anordnung nicht geeignet. Aus der DE 27 57 484 A1 ist eine Einrichtung zur Reinigung, Aufweitung, Reparatur und Ausflußmessung in Brunnen für Trinkwasser bekannt. Während des Reinigungsvorgangs wird ein Brunnenschacht mit Druckluft versorgt, die durch Öffnungen in dem Rohr des Brunnenschachtes in das umgebende Erdreich eintreten kann.

Aus der DE 36 25 488 A1, der DE 88 08 089 U1, der DE 38 05 200 C1 und der DE 38 11 962 C1 sind Anordnungen zum Austreiben leicht flüchtiger Verunreinigungen aus dem Grundwasser bekannt, die mit einem Brunnenschacht arbeiten, in dem sich ein Düsenkörper befindet. Unter dem Düsenkörper ist eine Luftkammer angeordnet, in die Frischluft eingeleitet wird. Durch Öffnungen in dem Düsenkörper treten Luftbläschen aus, die aufsteigen und dabei Verunreinigungen mitnehmen sollen.

Diese bekannten Anordnungen haben in der Praxis zu nur unbefriedigenden Reinigungseffekten geführt; auch müssen im allgemeinen zusätzliche Pumpen im Brunnenschacht angeordnet werden, um zu einer genügenden Förderung zu kommen.

Aufgabe der Erfindung ist es demgegenüber, eine Grundwasser-Reinigungseinrichtung vorzuschlagen, die zu einem besseren Reinigungseffekt für das im Bereich zwischen Ackersohle und Wasserleitersohle befindliche Grundwasser führt und so das Absinken der Schadstoffe in das Tiefenwasser verhindert oder vermindert.

Diese Aufgabe wird dadurch gelöst, daß ein Wasserförderrohr und ein Mantelrohr an ihrem oberen Ende zu einer Baueinheit verbunden sind, daß das Wasserförderrohr über seine Länge je eine voneinander getrennte und beabstandete seitliche obere und untere Wasserdurchtrittsstelle aufweist, daß das Mantelrohr eine in Längsrichtung der Rohre gegen die obere Wasserdurchtrittsstelle versetzte Wasseraustrittsöffnung aufweist, daß in das Wasserförderrohr von außen ein Gasinjektionsrohr solcher Länge eingeführt ist, daß die Gasaustrittsöffnung des Gasinjektionsrohres unterhalb der oberen Wasserdurchtrittsstelle des Wasserförderrohres liegt, und daß an den Raum zwischen dem Wasserförderrohr und dem Mantelrohr ein Gasaustrittsrohr angeschlossen ist, durch das das im Raum enthaltene Gas einem Filter zuführbar ist.

Im Prinzip besteht die Erfindung darin, daß ein von einem Mantelrohr umgebenes Wasserförderrohr vorgesehen ist, daß in einem unteren Bereich zum Wassereintritt und in einem oberen Bereich zum Wasseraustritt perforiert ist. Das Mantelrohr ist an seiner Außenseite ebenfalls perforiert, um das aus dem Wasserförderrohr austretende, angehobene Wasser in das Erdreich zurückzuspülen. Im Wasserförderrohr ist ein Gasinjektionsrohr angeordnet, durch das ein Gas in das im Wasserförderrohr befindliche Wasser injiziert wird. Das spezifische Gewicht des entstehenden Wasser/Gas-Gemisches zwischen den perforierten Bereichen ist geringer als das des nicht beaufschlagten Wassers, so daß das Gemisch aufsteigt, und zwar um so stürmischer, je tiefer die Einleitung in bezug auf die Wassersäule erfolgt. Dabei leitet ein Gasaustrittsrohr zwischen dem Wasserförderrohr und dem Mantelrohr die bei der turbulenten Mischung und Entmischung von Wasser und Gas vom Wasser getrennten flüchtigen Schadstoffe ab und führt sie einer Filterung zu. Die Rohre können jeweils aus einem Stück bestehen oder aus mehreren Einzelrohren und/oder Filterrohrteilen zusammengesetzt sein.

Als Gas kann im einfachsten Fall Luft eingesetzt werden. Versuche haben ergeben, daß mit Luft ein durchaus befriedigendes Ergebnis erzielbar ist. Es ist jedoch auch möglich, gezielt Gase oder Gasmischungen einzusetzen, die gerade besonders bevorzugt einen etwa gehäuft auftretenden flüchtigen Schadstoff, beispielsweise Chlorkohlenwasserstoffe, aufnehmen können und ableiten. Hierbei ist etwa an Gase zu denken, die chemisch reagieren, Brücken bilden oder anderweitig den Schadstoff angreifen.

Nicht nur bei derartigen Spezialgasen, sondern auch bei Luft ist es bevorzugt, wenn das dem Filter zugeführte Gas nach Passieren des Filters in einem geschlossenen Kreislauf erneut dem Gasinjektionsrohr zugeführt wird.

Mit einem derartigen geschlossenen Kreislauf kann ausgeschlossen werden, daß durch den Filter dennoch hindurchgelangende Schadstoffe in die Umwelt gelangen.

Bevorzugt sind die einzelnen Rohre konzentrisch umeinander angeordnet. Dies führt nicht nur zu einem symmetrischen Strömungsverhalten und zu einem verbesserten, intensiveren Kontakt-Gas-Wasser, sondern auch zu einem konstruktiv besonders zweckmäßigen Aufbau.

Besonders bevorzugt ist eine Ausführungsform, die sich dadurch auszeichnet, daß das Gasinjektionsrohr aus dem Führungsrohr und einem in diesem Führungsrohr verstellbar beweglichen Innenrohr besteht, wodurch die Gasaustrittsöffnung des Gasinjektionsrohres höhenverstellbar ist.

Das Gasinjektionsrohr wird damit teleskopähnlich. Die Gasaustrittsöffnung bzw. ihre Höhe innerhalb des Wasserförderrohrs wird verstellbar und variabel. Damit ist nicht nur eine Anpassung an den jeweiligen Einsatzort der erfindungsgemäßen Einrichtung möglich; zugleich kann während des Betriebes auf beispielsweise witterungsbedingte Änderungen des Grundwasserspiegels reagiert werden.

Dabei ist es bevorzugt, wenn die Verstellbarkeit des Innenrohres im Führungsrohr mittels einer Hebe-/Senkvorrichtung erfolgt.

Diese Hebe-/Senkvorrichtung kann mit einer Steuerungseinrichtung gekoppelt werden, die mit aus dem Erdreich oder aus dem Brunnenschacht entnommenen Werten und Meßdaten gespeist wird.

Eine weitere Ausführungsform zeichnet sich dadurch aus, daß das Innenrohr des Gasinjektionsrohres mit Perforationen seiner Wandung versehen ist, so daß mehrere höhenverteilte Austrittsöffnungen entstehen.

Mit diesem Merkmal wird es möglich, gleichzeitig aus verschiedenen Öffnungen in verschiedenen, wenn auch benachbarten Höhenlagen das Gas, beispielsweise die Luft, in das umgebende, mit Schadstoffen belastete Grundwasser einströmen zu lassen und so zu einer besonders intensiven Durchmischung zu kommen.

Konstruktiv besonders vorteilhaft ist es, wenn das Wasserförderrohr an seinem oberen Ende durch einen Flansch abgeschlossen ist, der mit dem oberen Ende des Mantelrohres abdichtend verbindbar ist. Dabei ist es von Vorteil, wenn der Flansch zugleich Durchführung und Halterung für das Gasinjektionsrohr ist. Dadurch wird das Vorsehen verschiedener Elemente zur Abdichtung unnötig.

Dabei ist es insbesondere vorgesehen, daß das Wasserförderrohr in seinem oberen Teil einen nach unten offenen geschlossenen Raum bildet.

Die oberen und unteren Wasserdurchtrittsstellen sowie die Wasseraustrittsöffnungen im Mantelrohr können durch Perforationen in den jeweiligen Rohren vorgesehen werden.

Besonders bevorzugt ist es allerdings, wenn die obere Wasserdurchtrittsstelle im Förderrohr von einem Schlitzbrückenfilter gebildet wird.

Derartige Schlitzbrückenfilter, beispielsweise rohrförmige Abschnitte mit Schlitzbrückenlochungen, sind besonders geeignet, beim Durchtreten von Wasser die Turbulenz in dem ausströmenden Medium zu verstärken.

In einigen Anwendungsfällen ist es von Vorteil, wenn das verschmutzte Grundwasser nicht aus dem unteren Bereich entnommen, sondern aus den oberen Schichten abgezogen wird. Aromatische Kohlenwasserstoffe liegen im allgemeinen oberhalb des Gebietes der Chlorkohlenwasserstoffe, also dichter benachbart zur Erdoberfläche, vor.

In bestimmten Fällen ist es auch wünschenswert, diese beiden Möglichkeiten mit geringem Aufwand austauschbar zu gestalten.

Dies wird dadurch ermöglicht, daß das Mantelrohr von einem weiteren, konzentrischen äußeren Mantelrohr umgeben ist, daß Perforationen zum Wassereintritt und versetzt zu diesen eine Durchströmöffnung in das Wasserförderrohr in den Bereich unterhalb des Gasinjektionsrohres besitzt, und daß die Wasseraustrittsöffnung des Mantelrohrs in den unteren, vom oberen Bereich um das Gasinjektionsrohr getrennten Bereich des Wasserförderrohrs führen.

Der Zustrom des ungereinigten Grundwassers erfolgt jetzt durch Perforationen in dem äußeren Mantelrohr, also im oberen Bereich dichter benachbart zur Erdoberfläche. Von dort strömt es über Kanäle in den Bereich des Förderrohrs unterhalb des Gasinjektionsrohrs. Diese Kanäle überbrücken den Zwischenraum zwischen dem inneren Mantelrohr und dem Förderrohr, welcher hier für das schadstoffbelastete Grundwasser nicht zugänglich ist. Wie bei der oben erläuterten Alternative wird nun das schadstoffbelastete Grundwasser zusammen mit dem aus dem Gasinjektionsrohr austretenden Gas, beispielsweise Luft, angehoben, mit den erläuterten Vorteilen. Durch die Perforationen im Förderrohr tritt es jetzt in den zuvor ausgesparten Zwischenraum zwischen Förderrohr und innerem Mantelrohr. Von hier werden nach oben die gasförmigen Anteile mit den Schadstoffen abgezogen. Das so gereinigte Wasser strömt nun im Gegensatz zur ersten erläuterten Alternative nicht in die Umgebung aus, sondern durch Wasseraustrittsöffnungen nun in den unteren Bereich des Förderrohrs. Diese Wasseraustrittsöffnungen "kreuzen" sich mit den oben erwähnten Kanälen, wobei selbstverständlich keine Übergangsstellen vorgesehen sind. Das gereinigte Grundwasser tritt nun aus den unteren Perforationen des Förderrohrs in das Erdreich aus. Hier hat also eine Umkehr des Wasserflusses stattgefunden, da durch die gleichen Perforationen in der ersten Alternative das schadstoffbelastete Grundwasser eintritt.

Damit ergibt sich zugleich der Vorteil, die Konstruktion mit nur unwesentlichen Veränderungen umgekehrt zu betreiben. Es muß lediglich eine Art Reversiereinsatz vorgesehen werden. Der untere Bereich des Förderrohrs und das äußere Mantelrohr bleiben jeweils erhalten und fest im Erdreich. Der obere Bereich des Förderrohrs aus der ersten Alternative wird entnommen und statt seiner ein anderer oberer Förderrohrbereich zusammen mit dem inneren Mantelrohr und den nach unten verlegten Wasseraustrittsöffnungen eingeführt. Die beiden Rohre sind unten miteinander vorzugsweise verschweißt und laufen konisch aus, um in den unteren Bereich des Förderrohrs eingeführt werden zu können.

Dabei kann vorzugsweise durch O-Ringe eine selbständige Eindichtung erfolgen. Am oberen Ende kann wiederum wie in der ersten Alternative die Konstruktion mittels eines Flansches luftdicht abgeschlossen werden.

Das innere Mantelrohr kann dabei einfach seitlich gegen das äußere Mantelrohr zentriert werden.

Die bevorzugte Konstruktion zeichnet sich unter anderem dadurch aus, daß ein von einem Mantelrohr und einem äußeren Mantelrohr konzentrisch umgebenes Wasserförderrohr vorgesehen ist, das zwei voneinander getrennte Bereiche aufweist, daß das äußere Mantelrohr an seiner Außenseite perforiert ist, um aus dem Erdreich schadstoffbeaftetes Wasser eintreten zu lassen, daß das Wasser aus dem Bereich zwischen den beiden Mantelrohren in den unteren Teil des oberen Bereichs des Wasserförderrohrs unterhalb des unteren Endes eines Gasinjektionsrohres durch Übertrittskanäle gelangen kann, daß durch das Gasinjektionsrohr ein Gas in das im Wasserförderrohr befindliche Wasser injiziert wird, welches das spezifische Gewicht des Wassers verringert und dieses dadurch anhebt, wodurch es durch Perforationen in der Wandung des Wasserförderrohrs in das Mantelrohr tritt, wobei ein Gasaustrittsrohr zwischen dem Wasserförderrohr und dem Mantelrohr die bei der turbulenten Mischung und Endmischung von Wasser und Gas vom Wasser getrennten flüchtigen Schadstoffe ableitet und einem Filter zuführt und daß das Wasser in dem Bereich zwischen dem oberen Bereich des Förderrohrs und dem Mantelrohr durch eine Wasseraustrittsöffnung in den unteren Bereich des Förderrohrs austritt, aus dem es durch Perforationen (5) in das Erdreich zurückgespült wird.

Im folgenden wird anhand von zwei Ausführungsbeispielen die Erfindung anhand der Zeichnungen erläutert.

Es zeigen:
Figur 1 einen schematischen Schnitt durch eine erste Ausführungsform und
Figur 2 einen schematischen Schnitt durch eine zweite Ausführungsform und
Figur 3 einen schematischen Schnitt durch eine dritte Ausführungsform.

Im folgenden werden zunächst die in den beiden ersten Ausführungsbeispielen gemeinsamen Teile beschrieben.

Ein Wasserförderrohr 1 reicht mit seinem unteren Ende 2 bis in die Wasserleitersohle 26 und bildet dort einen Sumpf 3, in dem sich eventuell Feststoffe absetzen können. Oberhalb des Sumpfes 3 ist das Wasserförderrohr 1 perforiert und bildet durch diesen perforierten Bereich 4 eine Wasserdurchtrittsstelle 5, die den Rohreingang für das zu reinigende Wasser W darstellt. Der perforierte Bereich 4 kann auch von einem Drahtwickelfilter gebildet werden.

Das Wasserförderrohr 1 ist an seinem oberen Ende 6 luftdicht abgeschlossen, beispielsweise durch einen Flansch 7. Oberhalb des Wasserspiegels 24 ist das Wasserförderrohr 1 zur Bildung eines Rohrausganges für das angehobene Wasser W mit einer Wasserdurchtrittsstelle 8, beispielsweise einem perforierten Bereich 9 oder einem Schlitzbrückenfilter versehen. Der Bereich 10 zwischen dem Bereich 9 und dem Flansch 7 ist im wesentlichen, d.h. bis auf die Verbindung zum perforierten Bereich 9, abgeschlossen. Durch den Flansch 7 ist in das Wasserförderrohr 1 ein Gasinjektionsrohr 11 eingeführt.

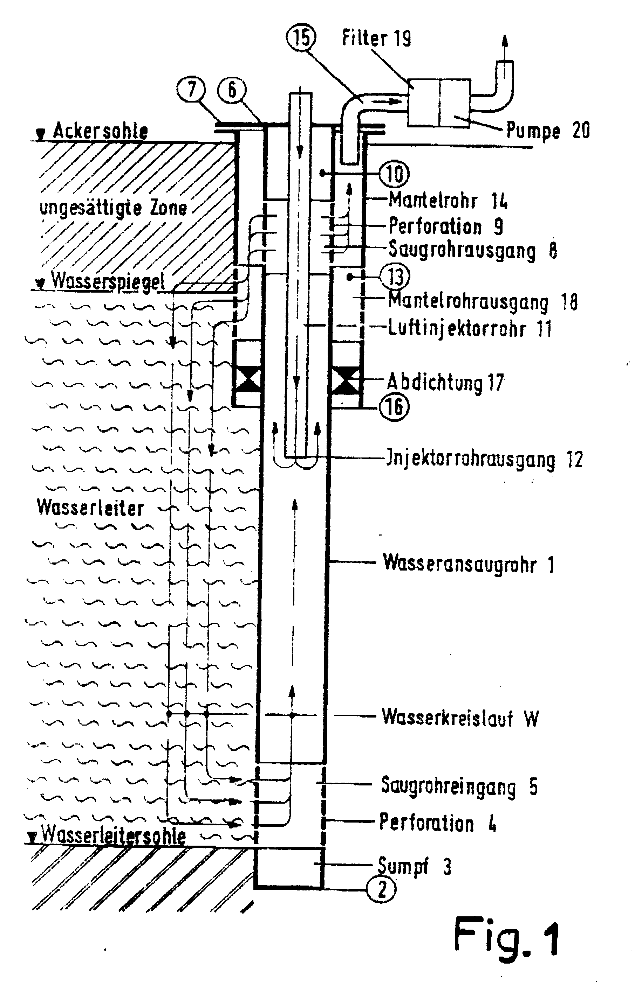

Dieses Gasinjektionsrohr 11 unterscheidet sich in den beiden Ausführungsformen; es wird im folgenden zunächst das Ausführungsbeispiel der Figur 1 weiter beschrieben. Das untere Ende 12 des Gasinjektionsrohres 11 ist bis unterhalb des Wasserspiegels 24 und des perforierten Bereiches 9 mit der Wasserdurchtrittsstelle 8 geführt.

Durch das dort am unteren Rohrende 12 austretende und sofort nach oben strebende injizierte Gas, beispielsweise die Luft, wird ein Unterdruck erzeugt, der das Grundwasser durch den Rohreingang, die Wasserdurchtrittsstelle 5, ansaugt. Das nach oben strebende Gas-Wasser-Gemisch tritt durch die Wasserdurchtrittsstelle 8, beispielsweise den perforierten Bereich 9 oder das Schlitzbrückenfilter, im Wasserförderrohr 1 in einen Raum 13 aus, der das Wasserförderrohr 1 konzentrisch umgibt und zwischen der Außenseite des Wasserförderrohres 1 und der Innenwandung eines Mantelrohres 14 gebildet wird.

Das Mantelrohr 14 umschließt das Wasserförderrohr 1 konzentrisch und ist an seinem oberen Ende bis auf ein Gasaustrittsrohr 15 dicht abgeschlossen. Das Mantelrohr 14 ist an seinem unteren Rohr 16 gegenüber dem Wasserförderrohr 1 durch einen Dichtring 17 abgedichtet. Der Dichtring 17 kann eine Semi-Dichtung sein. Das Mantelrohr 14 ist mit einer seitlichen Wasseraustrittsstelle 18, beispielsweise einem Drahtwickelfilter oder einer Perforation, versehen. Das angehobene Wasser sinkt nach dem Durchtritt durch die Wasserdurchtrittsstelle 8 des Wasserförderrohres 1 zunächst in den vom Mantelrohr 14 umschlossenen Bereich, dem Raum 13, ab. Dann tritt es durch die Wasseraustrittsöffnung 18 und ggf. die Semi-Dichtung in das Erdreich aus.

Die Wasseraustrittsöffnung 18, also das Drahtwickelfilter oder die Perforation, des Mantelrohres 14 ist soweit unterhalb der Wasserdurchtrittsstellen 8 des Wasserförderrohres 1 angeordnet, daß das turbulent aufsteigende Wasser W durch die Wasserdurchtrittsstelle 8 des Wasserförderrohres 1 schießt und danach auf die geschlossene Innenwandung des Mantelrohres 14 trifft.

Das Wasser W führt also einen Kreislauf durch. Es tritt vom Wasserleiter 25 durch die Wasserdurchtrittsstelle 5, den Rohreingang, in das Wasserförderrohr 1 ein, steigt bis zur Wasserdurchtrittsstelle 8, dem Rohrausgang des Wasserförderrohres 1, auf, und gelangt von dort durch das Mantelrohr 14 wieder in den Wasserleiter 25 des Erdreiches zurück.

Je nach der Höhenlage des Ausganges 12 des Gasinjektionsrohres im Wasserförderrohr 1 ist die Wassersäule verschieden hoch, die auf dem Wasser-Gas-Gemisch lastet und es schießt daher mit mehr oder weniger großer Geschwindigkeit nach oben. Dort trifft das Wasser W auf den nach oben geschlossenen Raum 10 und wird von dort reflektiert oder zurückgeworfen. Das im geschlossenen Raum 10 befindliche Gaspolster wird durch das auf das Gaspolster aufprallende Wasser komprimiert. Weil das vom Gaspolster reflektierte Wasser auf das hochschießende Wasser trifft, ist die Kompression des Gaspolsters ungleichförmig. Es stellt sich ein pulsförmiges oder turbulentes Verhalten ein. Durch diese Turbulenz in Verbindung mit der Wasserdurchtrittsstelle 8 des Wasserförderrohres 1 und dem Auftreffen des Wasser W auf die Innenwandung des Mantelrohres 14 wird das Wasser W relativ stark verwirbelt und dabei mit dem injizierten Gas vermischt.

Dadurch beinhaltet das durch das Gasaustrittsrohr 15 ständig abgesaugte Gas auch wesentliche Teile der im Wasser W enthaltenen Schadstoffe. Durch die bis ins Erdreich wirkende Vibration der Turbulenzen in den Rohr wird die Trennung der Schadstoffe selbst von kleinen Korngrößen des Erdreiches begünstigt.

Das durch das Gasaustrittsrohr 15 mittels einer Pumpe, eines Ventilators oder dgl. abgesaugte Gas bzw. die Luft wird über einen Filter 19 geleitet. Dieses Filter 19 enthält nach einiger Zeit der Filterung beträchtliche Mengen an Schadstoffen, die dann konzentriert entsorgt werden können.

Das gesamte Rohrsystem 1, 14, 11 kann unter der Erde verborgen sein und nur mit der für die Gaszufuhr erforderlichen, relativ geringen Energiemenge betrieben werden. Nach einiger Betriebszeit mit ständig angesaugtem schadstoffhaltigen Grundwasser und ständig in das Erdreich zurückgeleitetem gereinigten Wasser setzen sich im Filter 19 keine weiteren Schadstoffe mehr ab.

Dann kann die Einrichtung abgeschaltet oder ausgebaut und an anderer Stelle wieder aufgebaut und dort betrieben werden. Es ist auch möglich, gleichzeitig oder alternierend eine größere Anzahl gleichartiger Einrichtungen über eine größere Fläche verteilt zu betreiben, um beispielsweise die aus einer Deponie an vielen Stellen austretenden Schadstoffe möglichst schnell vollkommen zu entsorgen oder auf ein nicht mehr gefährdendes Ausmaß herabzusetzen.

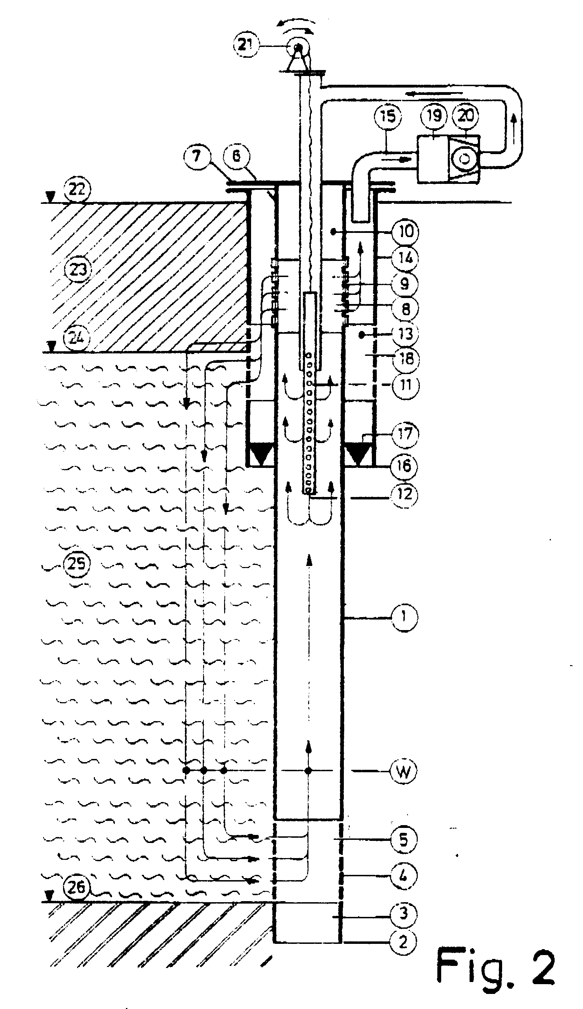

Das in Figur 2 dargestellte Ausführungsbeispiel unterscheidet sich von dem vorbeschriebenen in dem Aufbau des Gasinjektionsrohres 11. Diese besitzt hier ein Führungsrohr 11a sowie ein in diesem axial verschiebbar gelagertes Innenrohr 11b. Dadurch wird es besonders leicht möglich, die Geschwindigkeit des aufsteigenden Wasser-Gas-Gemisches einzustellen oder zu verändern. Dadurch wird es möglich, die Menge des eintretenden Wassers auf ein Maß einzustellen, daß von der Einrichtung ohne Überfüllung und bei zweckmäßigstem Wirkungsgrad verarbeitet werden kann. Die Verschiebung kann mit einer Hebe-/ Senkvorrichtung 21 versehen werden, die oberhalb der übrigen Einrichtung angeordnet und mit einem einfachen, konstruktiv wenig anfälligen Seilzug versehen ist, mittels dem das Innenrohr innerhalb des Führungsrohr hinaufgezogen bzw. herabgelassen werden kann. Auch eine Steuerung kann vorgesehen werden (nicht dargestellt), mit der automatisch etwa in Abhängigkeit vom Grundwasserspiegel, von äußeren Bedingungen oder auch von Signalen aus dem Filter 19 oder Durchflußmessern an beliebiger Stelle eine Regelung der Höhe des unteren Endes 12 des Innenrohrs 11b des Gasinjektionsrohres 11 vorgenommen werden kann.

Die Zuführung des Gases in das System wird in der Ausführungsform nach Figur 1 jeweils mit Frischluft vorgenommen, während die Pumpe 20 das durch den Filter 19 gelangende Gas wieder ins Freie führt.

In der demgegenüber bevorzugten Ausführungsform nach Figur 2 ist dagegen ein Kreislauf für das Gas vorgesehen; die Pumpe 20 bzw. ein nach Versuchen besonders bevorzugter, weil mit hohem Wirkungsgrad und effektiv arbeitender Seitenkanalverdichter fördert das durch den Filter 19 gelangende Gas wieder über eine Leitung zurück zum Gasinjektionsrohr 11. Es wird dadurch zugleich von oben in das Gasinjektionsrohr 11 hineingedrückt und über das Gasaustrittsrohr 15 herausgesaugt.

Für das Filter 19 gibt es eine Vielzahl von Möglichkeiten, die u.a. auch auf den jeweils herauszufilternden Schadstoff abgestimmt werden können.

Bei einem praktisch erprobten Ausführungsbeispiel der Erfindung hatte das Wasserförderrohr 1 eine Gesamtlänge von 18 m, die zusammen mit dem Mantelrohr 14 nach den Regeln des Brunnenbaus am Ort des Einbaus eingebaut und montiert wurden. Das Mantelrohr 14 entsprach mit einer Länge von 8 m etwa der Dicke der ungesättigten Zone. Die Wasseraustrittsöffnung 18 im Mantelrohr 14 begann etwa 1 m oberhalb des Wasserspiegels 24 und reichte soweit nach unten, daß Variationen im Wasserspiegel 24 und der Versickerung keinen nennenswerten Einfluß auf den Abfluß des Wassers hatten. Die Wasserdurchtrittsstelle 8 des Wasserförderrohres 1 beginnt oberhalb der Wasseraustrittsöffnung 18 des Mantelrohrs 14, schon um Auswaschungen zu verhindern.

Der Abstand dieser beiden Wasserdurchtrittsbereiche im Wasserförderrohr 1 einerseits und im Mantelrohr 14 andererseits ist abgesehen von dem zu vermeidenden Auswaschungseffekt relativ unkritisch, da das geförderte Wasser nur genügend Raum 13 zwischen den Rohren 11 und 14 für Aufnahme und Abfluß finden muß.

Kritisch ist dagegen der Abstand zwischen der Wasserdurchtrittsstelle 8 und dem unteren Ende 12 bzw. den Austrittsöffnungen des Gasinjektionsrohres 11 bzw. dessen Innenrohres 11b. Bei einem zu kleinen Abstand ist die Turbulenz des aufsteigenden Wasser-Gas-Gemisches unbefriedigend und daher auch die Menge der abgetrennten Schadstoffe und bei einem zu großen Abstand wird zu viel Wasser gefördert. Bei 1,50 m Abstand beträgt die Druckdifferenz bereits 1.500 mm Wassersäule. Auf der Einstellung und Einhaltung der richtigen Druckdifferenz beruht das zweckmäßigste Funktionieren des Systems.

Die Rohre können aus den üblichen für Pumpensysteme bekannten Materialien bestehen. Es haben sich aber auch Plastik-Materialien als günstig erwiesen. Das Wasserförderrohr 1 ist vorzugsweise im Mantelrohr 14 zentriert. Dies geschieht im oberen Bereich durch den Flansch 7 und im unteren Bereich durch die Dichtung 16 (bzw. die Semi-Dichtung). Das Gasinjektionsrohr 11 ist im Flansch 7 zentriert befestigt. Das Filter, z.B. ein Aktivkohlefilter, kann mit der Pumpe 20 bzw. dem zum Fördern eingesetzten Aggregat eine Baueinheit bilden. Als Pumpe bzw. Aggregat hat sich für die Experimentierarbeit bereits ein einfacher Ventilator als funktionsfähig für die Lösung der Aufgabe erwiesen, wenn auch ein Seitenkanalverdichter effektiver ist.

Da das System für einen ständigen Einsatz untertage vorgesehen ist, je nach Schadstoffbelastung also auch für Tage und Nächte, kann es zweckmäßig sein, die Baueinheit 19, 20 trotz ihrer relativ geringen Geräuschentwicklung in einem schallisolierenden Behälter unterzubringen, einer sogenannten Prozeßeinheit.

Die erfindungsgemäße Anordnung ist vorstehend im Zusammenhang mit dem Grundwasser im Boden beschrieben worden. In allen Anwendungszwecken wird eine Wasserzirkulation vom Tief- zum Hochbereich erzeugt, die eine Wasserumwälzung im gesamten Wasserstockwerk ermöglicht. Die verschiedenen Öffnungen und Perforationen der Rohre sowohl zum Wassereintritt und Wasseraustritt halten auch Sand, Kies oder dgl. zurück. Günstige Verhältnisse für die Wasserumwälzung wie auch für die Trennung und Ableitung der Schadstoffe aus dem umgewälzten Wasser hatte ein System mit Durchmessern von 250 bis 300 mm für das Mantelrohr 14, 50 bis 100 mm für das Wasserförderrohr 1 und 50 mm für das Gasinjektionsrohr 11. Der Durchmesser des Gasinjektionsrohres 11 erlaubt auch, während des Betriebes Meßgeräte in das Wasserförderrohr 1 herabzulassen, um beispielsweise die Geschwindigkeit des emporschießenden Wassers zu messen und ggf. die Meßgröße zur automatischen Einstellung über die Hebe-/Senkvorrichtung 21 des Gasinjektionsrohres 11 zu verwenden.

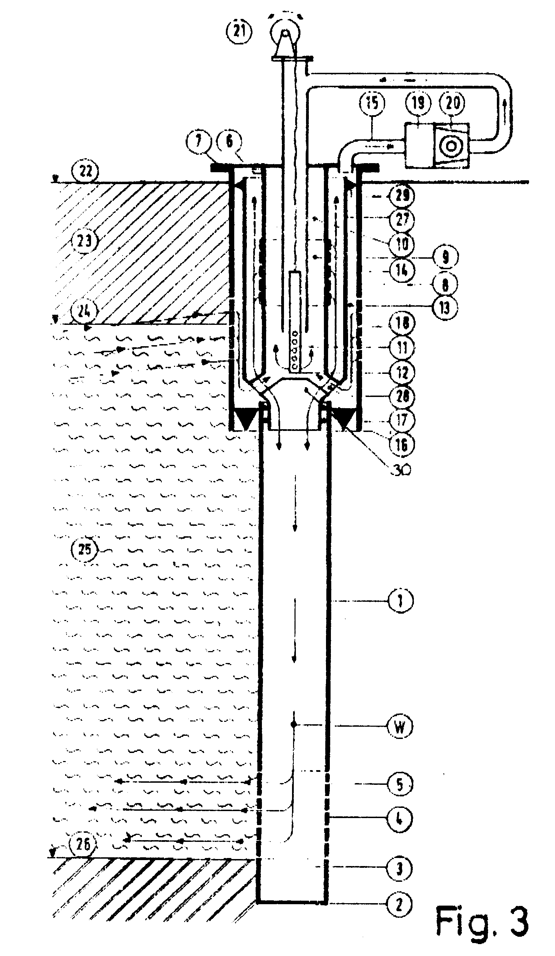

Figur 3 zeigte eine weitere Ausführungsform, bei der die meisten Elemente den beiden ersten Ausführungsformen entsprechen. Zum Teil können Sie nun allerdings in anderer Weise verwendet werden.

Der einfachheithalber seien im wesentlichen nur die Unterschiede beschrieben. Das Förderrohr 1 ist hier in zwei Bereiche aufgeteilt. Der untere Bereich schließt nach oben unterhalb des unteren Endes des Gasinjektionsrohres 11 ab. Der untere und der obere Bereich des Förderrohres sind miteinander nicht verbunden.

Zwischen dem Mantelrohr 14, hier als äußeres Mantelrohr 14 bezeichnet, und dem Förderrohr 1 ist in dem oberen Bereich ein weiteres konzentrisches Mantelrohr 27 eingefügt. Das Mantelrohr 27 besitzt keine Perforationen. Der Raum 13 zwischen den Rohren 11 und 14 wird jetzt also durch das innere Mantelrohr 27 vertikal in zwei konzentrische zylinderähnliche Ringräume unterteilt.

Der äußere von diesen beiden Ringräumen, der Zwischenraum zwischen den Mantelrohren 14 und 27, steht durch die Perforationen 18 mit dem umgebenden Erdreich in Verbindung. Nach oben und unten ist er dicht abgeschlossen, nach innen ist er über Rohr- bzw. Übertrittskanäle mit dem Innenraum des oberen Bereichs des eingeschweißten Förderrohrs 1 verbunden.

Der andere Ringraum zwischen der Außenseite des Förderrohrs 1 und dem inneren Mantelrohr 27 steht nach oben mit dem Gasaustrittsrohr 15 in Verbindung, während er nach unten über das konische Mantelrohrendstück (30) in Verbindung mit dem unteren Bereich des Förderrohres 1 steht. Nach außen besitzt er keine Verbindung, während er nach innen über die Perforationen 8 des Förderrohres mit dem oberen Teil des oberen Bereichs des Innenraums des Förderrohres 1 verbunden ist.

Dieser Innenraum des oberen Bereichs des Fördrrohrs 1 seinerseits besitzt nach oben keine Verbindung, auf seiner unteren Seite ist er nach außen wie erwähnt mit dem unteren Teil des Ringraums zwischen den beiden Mantelrohren 14 und 27 verbunden. Im Bereich dieser Verbindung ist auch das untere Ende des Gasinjektionsrohres 11 vorgesehen.

Der Wasserkreislauf spielt sich nun so ab, daß das beispielsweise mit aromatischen Kohlenwasserstoffen (AKW) verunreinigte Grundwasser durch die Perforationen 18 in den Raum zwischen den beiden Mantelrohren 14 und 27 eintritt. Durch die Übertritts- bzw. Einstromkanäle 28 gelangt es in das untere Ende des oberen Bereichs des Förderrohres 1 und wird dort von dem Sauerstoff bzw. sonstigen Gas aus dem Gasinjektionsrohr 11 beaufschlagt und dadurch angehoben. Wie in der ersten Alternative treten dabei pulsierende Effekte des entstehenden Gas-Wasser-Gemischs auf, die die Schadstoffe vom Grundwasser 4 lösen. Beides tritt durch die Perforationen 8 des Förderrohres in den Raum zwischen Förderrohr 1 und innerem Mantelrohr 27. Die gasförmigen Bestandteile zusammen mit den Schadstoffen streben nach oben in Richtung zum Gasaustrittsrohr 15, das gereinigte Grundwasser fließt über das konische Endstück 30 des Mantelrohrs 27 in den unteren Bereich des Förderrohres 1. Dort tritt es über die Perforationen 5 wieder in das Erdreich bzw. den Wasserleiter 25 oberhalb der Wasserleitersohle 26 aus.

Im Gegensatz zur Ausführungsform der ersten beiden Alternativen ist jetzt der Eintrittspunkt des Wassers von unten nach oben, der Austrittspunkt von oben nach unten verlegt. Die Zirkulation verläuft jetzt also von oben nach unten. Ein Austausch der beiden Alternativen ist möglich, in dem der Reversiereinsatz der im wesentlichen aus den Elementen 27 und oberer Bereich des Förderrohres 1 besteht, nach Entnahme des oberen Bereichs des Förderrohres 1 gemäß erster Alternative eingesetzt wird.

Die beschriebene Einrichtung kann als vorgefertigte Einheit geliefert werden, aber auch am Einsatzort aus vorgefertigten Bauteilen zusammengesetzt werden, um das beschriebene Verfahren zur Reinigung des Grundwassers durchzuführen.

Das gesamte Rohrsystem ist bis in den Grundwasserleiter absenkbar. Der Saug- und Schluckbrunnen wird auf diese Weise integriert.

## Patentansprüche

1. Einrichtung zur Reinigung von beispielsweise mit Schadstoffen belastetem Grundwasser, unter Verwendung von Luft oder anderen Gasen sowie eines bis in den Bereich des Grundwassers vorgetriebenen Rohrs, **dadurch gekennzeichnet,** daß ein Wasserförderrohr (1) und ein Mantelrohr (14 bzw. 27) an ihrem oberen Ende zu einer Baueinheit verbunden sind, daß das Wasserförderrohr (1) über seine Länge je eine voneinander getrennte und beabstandete seitliche obere und untere Wasserdurchtrittsstelle (5,8) aufweist, daß das Mantelrohr (14 bzw. 27) eine in Längsrichtung der Rohre (1,14,27) gegen die obere Wasserdurchtrittsstelle (8) versetzte Wasseraustrittsöffnung (18 bzw. 28) aufweist, daß in das Wasserförderrohr (1) von außen ein Gasinjektionsrohr (11) solcher Länge eingeführt ist, daß die Gasaustrittsöffnung des Gasinjektionsrohres (11) unterhalb der oberen Wasserdurchtrittsstelle (8) des Wasserförderrohres (1) liegt, und daß an den Raum (13) zwischen dem Wasserförderrohr (1) und dem Mantelrohr (14 bzw. 27) ein Gasaustrittsrohr (15) angeschlossen ist, durch das das im Raum (13) enthaltene Gas einem Filter (19) zuführbar ist.

2. Einrichtung nach Anspruch 1, **dadurch gekennzeichnet,** daß das Mantelrohr (14 bzw. 27) das Wasserförderrohr (1) und dieses wiederum das Gasinjektionsrohr (11) konzentrisch umgibt.

3. Einrichtung nach Anspruch 1 oder 2, **dadurch gekennzeichnet,** daß das Gasinjektionsrohr (11) aus einem Führungsrohr (11a) und einem in diesem Führungsrohr (11a) verstellbar beweglichen Innenrohr (11b) besteht, wodurch die Gasaustrittsöffnung des Gasinjektionsrohres höhenverstellbar ist.

4. Einrichtung nach Anspruch 3, **dadurch gekennzeichnet,** daß das Innenrohr (11b) des Gasinjektionsrohres (11) mit Perforationen seiner Wandung versehen ist, so daß mehrere höhenverteilte Austrittsöffnungen entstehen.

5. Einrichtung nach Anspruch 3 oder 4, **dadurch gekennzeichnet,** daß die Verstellbarkeit des Innenrohrs (11b) im Führungsrohr (11a) mittels einer Hebe-/Senkvorrichtung (21) erfolgt.

6. Einrichtung nach einem der vorstehenden Ansprüche, **dadurch gekennzeichnet,** daß das Wasserförderrohr (1) an seinem oberen Ende durch einen Flansch (7) abgeschlossen ist, der mit dem oberen Ende des Mantelrohres (14, 27) abdichtend verbindbar ist.

7. Einrichtung nach Anspruch 6, **dadurch gekennzeichnet,** daß der Flansch (7) zugleich Durchführung und Halterung für das Gasinjektionsrohr (11) ist.

8. Einrichtung nach einem der vorstehenden Ansprüche, **dadurch gekennzeichnet,** daß das Wasserförderrohr (1) in seinem oberen Teil einen nach unten offenen geschlossenen Raum (10) bildet.

9. Einrichtung nach einem der vorstehenden Ansprüche, **dadurch gekennzeichnet,** daß die Wasserdurchtrittsstellen (5,8) und die Wasseraustrittsöffnungen (18) durch Perforationen in den Rohren (1,14,27) gebildet werden.

10. Einrichtung nach einem der vorstehenden Ansprüche, **dadurch gekennzeichnet,** daß die obere Wasserdurchtrittsstelle (8) von einem Schlitzbrückenfilter gebildet wird.

11. Einrichtung nach einem der vorstehenden Ansprüche, **dadurch gekennzeichnet,** daß das dem Filter (19) zugeführte Gas nach Passieren des Filters in einem geschlossenen Kreislauf erneut dem Gasinjektionsrohr (11) zugeführt wird.

12. Einrichtung nach einem der vorstehenden Ansprüche, **dadurch gekennzeichnet,** daß ein von einem Mantelrohr (14,27) konzentrisch umgebenes Wasserförderrohr (1) vorgesehen ist, das in einem unteren Bereich (bei 5) zum Wassereintritt und in einem oberen Bereich (bei 8) zum Wasseraustritt perforiert ist, daß das Mantelrohr (14,27) an seiner Außenseite perforiert ist, um das aus dem Wasserförderrohr (1) austretende, angehobene Wasser in das Erdreich zurückzuspülen, und daß im Wasserförderrohr (1) ein Gasinjektionsrohr (11) angeordnet ist, durch das ein Gas in das im Wasserförderrohr (1) befindliche Wasser injiziert wird, welches das spezifische Gewicht des Wassers zwischen den perforierten Bereichen verringert und dieses dadurch anhebt, wobei ein Gasaustrittsrohr (15) zwischen dem Wasserförderrohr (1) und dem Mantelrohr (14,27) die bei der turbulenten Mischung und Entmischung von Wasser und Gas vom Wasser getrennten flüchtigen Schadstoffe ableitet und einem Filter zuführt.

13. Einrichtung nach einem der Ansprüche 1 bis 11, **dadurch gekennzeichnet,** daß das Mantelrohr (27) von einem weiteren, konzentrischen äußeren Mantelrohr (14) umgeben ist, das Perforationen zum Wassereintritt und versetzt zu diesen eine Einströmöffnung (28) in das Wasserförderrohr (1) in den Bereich unterhalb des Gasinjektionsrohres (11) besitzt, und daß die Wasseraustrittsöffnung (im konischen Endstück 30) des Mantelrohrs (27) in den unteren, vom oberen Bereich um das Gasinjektionsrohr (11) getrennten Bereich des Wasserförderrohrs (1) führt.

14. Einrichtung nach Anspruch 13, **dadurch gekennzeichnet,** daß ein von einem Mantelrohr (27) und einem äußeren Mantelrohr (14) konzentrisch umgebenes Wasserförderrohr (1) vorgesehen ist, das zwei voneinander getrennte Bereiche aufweist, daß das äußere Mantelrohr (14) an seiner Außenseite perforiert ist, um aus dem Erdreich schadstoffbehaftetes Wasser eintreten zu lassen, daß das Wasser aus dem Bereich zwischen den beiden Mantelrohren (14, 27) in den unteren Teil des oberen Bereichs des Wasserförderrohrs (1) unterhalb des unteren Endes eines Gasinjektionsrohres (11) durch Übertrittskanäle (28) gelangen kann, daß durch das Gasinjektionsrohr (11) ein Gas in das im Wasserförderrohr (1) befindliche Wasser injiziert wird, welches das spezifische Gewicht des Wassers verringert und dieses dadurch anhebt, wodurch es durch Perforationen (8) in der Wandung des Wasserförderrohrs (1) in das Mantelrohr (27) tritt, wobei ein Gasaustrittsrohr (15) zwischen dem Wasserförderrohr (1) und dem Mantelrohr (27) die bei der turbulenten Mischung und Endmischung von Wasser und Gas vom Wasser getrennten flüchtigen Schadstoffe ableitet und einem Filter zuführt und daß das Wasser in dem Bereich zwischen dem oberen Bereich (bei 8) des Förderrohrs (1) und dem Mantelrohr (27) durch ein konisches Endstück (30) in den unteren Bereich (bei 5) des Förderrohrs (1) austritt, aus dem es durch Perforationen (5) in das Erdreich zurückgespült wird.

## Claims

1. A device for cleaning ground water loaded for example with pollutants, using air or other gases and a pipe driven into the region of the ground water, **characterised in that** a water conveying pipe (1) and a sleeve pipe (14 or 27) are connected at their upper end to form an assembly, that the water conveying pipe (1) has over its length respective upper and lower lateral water passage locations (5,8) separate and spaced from each other, that the sleeve pipe (14 or 27) has a water outlet opening (18 or 28) offset longitudinally of the pipes (1, 14, 27) relative to the upper water passage location (8), that a gas injection pipe (11) is introduced from outside into the water conveying pipe (1) of such a length that the gas outlet opening of the gas injection pipe (11) lies below the upper water passage location (8) of the water conveying pipe (1) and that a gas outlet pipe (15) is connected to the space (13) between the water conveying pipe (1) and the sleeve pipe (14 or 27), through which the gas contained in the space (13) can be supplied to a filter (19).

2. A device according to claim 1, **characterised in that** the sleeve pipe (14 or 27) surrounds the water conveying pipe (1) concentrically and the latter in turn the gas injection pipe (11).

3. A device according to claim 1 or 2, **characterised in that** the gas injection pipe (11) consists of a guide pipe (11a) and an inner pipe (11b) adjustably movable in the said guide pipe (11a), whereby the gas outlet openinng of the gas injection pipe is adjustable in height.

4. A device according to claim 3, **characterised in that** the inner pipe (11b) of the gas injection pipe (11) is provided with perforations in its walls, so that a plurality of height distributed outlet openings are formed.

5. A device according to claim 3 or 4, **characterised in that** the adjustability of the inner pipe (11b) in the guide pipe (11a) is effected with the aid of a raising/lowering device (21).

6. A device according to any one of the preceding claims, **characterised in that** the water conveying pipe (1) is terminated at its upper end by a flange (7) which can be connected, so as to seal, to the upper end of the sleeve pipe (14, 27).

7. A device according to claim 6, **characterised in that** the flange (7) is simultaneously a passage and a mounting for the gas injection pipe (11).

8. A device according to any one of the preceding claims, **characterised in that** in its upper part the water conveying pipe (1) forms an enclosed space (10) open to the bottom.

9. A device according to any one of the preceding claims, **characterised in that** the water passage locations (5, 8) and the water outlet openings (18) are formed by perforations in the pipes (1, 14, 27).

10. A device according to any one of the preceding claims, **characterised in that** the upper water passage location (8) is formed by a slit/bridge filter.

11. A device according to any one of the preceding claims, **characterised in that** the gas supplied to the filter (19) is supplied again to the gas injection pipe (11) after passing the filter in a closed circulation.

12. A device according to any one of the preceding claims, **characterised in that** a water conveying pipe (1) surrounded concentrically by a sleeve pipe (14, 27) is provided which is perforated in a lower region (at 5) for water inlet and in an upper region (at 8) for water outlet, that the sleeve pipe (14,27) is perforated at its outside, in order to wash back the raised water leaving the water conveying pipe (1), into the ground, and that there is arranged in the water conveying pipe (1) a gas injection pipe (11), through which a gas is injected into the water located in the water conveying pipe (1) which reduces the specific gravity of the water between the perforated regions and raises said water thereby, in which a gas outlet pipe (15) between the water conveying pipe (1) and the sleeve pipe (14, 27) carries off the volatile pollutants separated from the water during the turbulent mixing and separation of water and gas and supplies them to a filter.

13. A device according to any one of claims 1 to 11, **characterised in that** the sleeve pipe (27) is surrounded by a further concentric outer sleeve pipe(14) which has perforations for water entry and offset thereto an inflow opening (28) into the water conveying pipe (1) into the region below the gas injection pipe (11) and that the water outlet opening (in the conical end piece 30) of the sleeve pipe (27) leads into the lower region of the water conveying pipe (1) separate from the upper region around the gas injection pipe (11).

14. A device according to claim 13, **characterised in that** a water conveying pipe (1) is provided which is concentrically surrounded by a sleeve pipe (27) and an outer sleeve pipe (14), and which has two separate regions, that the outer sleeve pipe (14) is perforated on its outside, so as to allow in water with pollutants from the ground, that the water from the region between the two sleeve pipes (14, 27) can arrive through joining channels (28) in the lower part of the upper region of the water conveying pipe (1) below the lower end of a gas injection pipe (11), that through the gas injection pipe (1) a gas is injected into the water located in the water conveying pipe (1), which reduces the specific gravity of the water and raises it thereby, whereby it passes into the sleeve pipe (27) through perforations (8) in the walls of the water conveying pipe (1), in which a gas outlet pipe (15) between the water conveying pipe (1) and the sleeve pipe (27) carries off volatile pollutants separated from the water during the turbulent mixing and separation of water and gas and supplies it to a filter and that the water in the region between the upper region (at 8) of the conveying pipe (1 and the sleeve pipe (27) emerges through a conical end piece (30) into the lower region (at 5) of the conveying pipe (1), from which it is washed back into the ground through perforations (5).

## Revendications

1. Dispositif d'épuration, par exemple d'eau souterraine chargée de polluants, en utilisant de l'air ou d'autres gaz, ainsi qu'un tube enfoncé jusque dans la région de l'eau souterraine, caractérisé par le fait qu'un tube (1) d'acheminement d'eau et un tube d'enveloppement (14, respectivement 27) sont reliés à leur extrémité supérieure, pour former un ensemble structurel unitaire ; par le fait que le tube (1) d'acheminement d'eau présente respectivement, sur sa longueur, des zones latérales supérieure et inférieure (5, 8) de passage de l'eau, séparées et distantes l'une de l'autre ; par le fait que le tube d'enveloppement (14, respectivement 27) est percé d'un orifice (18, respectivement 28) de sortie d'eau qui est décalé, dans le sens longitudinal des tubes (1, 14, 27), par rapport à la zone supérieure (8) de passage de l'eau ; par le fait qu'un tube (11) d'injection gazeuse, introduit de l'extérieur dans le tube (1) d'acheminement d'eau, présente une longueur telle que l'orifice de sortie de gaz du tube (11) d'injection gazeuse se trouve au-dessous de la zone supérieure (8) de passage de l'eau du tube (1) d'acheminement d'eau ; et par le fait qu'un tube (15) de sortie de gaz est raccordé à l'espace (13) situé entre le tube (1) d'acheminement d'eau et le tube d'enveloppement (14, respectivement 27), tube de sortie par l'intermédiaire duquel le gaz, renfermé par l'espace (13), peut être délivré à un filtre (19).

2. Dispositif selon la revendication 1, caractérisé par le fait que le tube d'enveloppement (14, respectivement 27) entoure concentriquement le tube (1) d'acheminement d'eau, lequel entoure concentriquement, à son tour, le tube (11) d'injection gazeuse.

3. Dispositif selon la revendication 1 ou 2, caractérisé par le fait que le tube (11) d'injection gazeuse se compose d'un tube de guidage (11a) et d'un tube interne (11b) à mobilité réglable dans ce tube de guidage (11a), de telle sorte que l'orifice de sortie de gaz du tube d'injection gazeuse soit réglable en hauteur.

4. Dispositif selon la revendication 3, caractérisé par le fait que la paroi du tube interne (11b) du tube (11) d'injection gazeuse est munie de perforations, ce qui donne naissance à plusieurs orifices de sortie répartis dans le sens de la hauteur.

5. Dispositif selon la revendication 3 ou 4, caractérisé par le fait que la faculté de réglage du tube interne (11b), dans le tube de guidage (11a), est assurée au moyen d'un système (21) de levage/abaissement.

6. Dispositif selon l'une des revendications précédentes, caractérisé par le fait que le tube (1) d'acheminement d'eau est obturé, à son extrémité supérieure, par l'intermédiaire d'une bride (7) pouvant être reliée, de manière étanche, à l'extrémité supérieure du tube d'enveloppement (14, 27).

7. Dispositif selon la revendication 6, caractérisé par le fait que la bride (7) permet simultanément la traversée et la retenue du tube (11) d'injection gazeuse.

8. Dispositif selon l'une des revendications précédentes, caractérisé par le fait que le tube (1) d'acheminement d'eau forme, dans sa partie supérieure, un compartiment fermé (10) qui est ouvert vers le bas.

9. Dispositif selon l'une des revendications précédentes, caractérisé par le fait que les zones (5, 8) de passage de l'eau et les orifices (18) de sortie d'eau sont matérialisés par des perforations pratiquées dans les tubes (1, 14, 27).

10. Dispositif selon l'une des revendications précédentes, caractérisé par le fait que la zone supérieure (8) de passage de l'eau est formée par un filtre en pont percé de fentes.

11. Dispositif selon l'une des revendications précédentes, caractérisé par le fait que le gaz délivré au filtre (19) est une nouvelle fois délivré en circuit fermé, après avoir franchi le filtre, au tube (11) d'injection gazeuse.

12. Dispositif selon l'une des revendications précédentes, caractérisé par la présence d'un tube (1) d'acheminement d'eau qui est entouré concentriquement par un tube d'enveloppement (14, 27) et est perforé dans une région inférieure (en 5), en vue de la pénétration de l'eau, et dans une région supérieure (en 8), en vue de la sortie de l'eau ; par le fait que le tube d'enveloppement (14, 27) est perforé à sa face externe afin de renvoyer, dans le sous-sol, l'eau qui monte et sort du tube (1) d'acheminement d'eau ; et par le fait que le tube (1) d'acheminement d'eau renferme un tube (11) d'injection gazeuse par l'intermédiaire duquel est injecté, dans l'eau située dans le tube (1) d'acheminement d'eau, un gaz ayant pour effets de réduire le poids spécifique de l'eau entre les régions perforées, et donc de faire monter cette eau, un tube (15) de sortie de gaz, intercalé entre le tube (1) d'acheminement d'eau et le tube d'enveloppement (14, 27), ayant alors pour effets de détourner les polluants volatils séparés d'avec l'eau lors du mélange et de la ségrégation par turbulence de l'eau et du gaz, et de les diriger vers un filtre.

13. Dispositif selon l'une des revendications 1 à 11, caractérisé par le fait que le tube d'enveloppement (27) est entouré par un autre tube d'enveloppement (14) extérieur et concentrique, qui présente des perforations en vue de la pénétration de l'eau et, d'une manière décalée par rapport à ces dernières, un orifice (28) d'afflux dans le tube (1) d'acheminement d'eau, dans la région située au-dessous du tube (11) d'injection gazeuse ; et par le fait que l'orifice de sortie d'eau (dans l'embout tronconique 30) du tube d'enveloppement (27) débouche dans la région inférieure du tube (1) d'acheminement d'eau, séparée de la région supérieure au voisinage du tube (11) d'injection gazeuse.

14. Dispositif selon la revendication 13, caractérisé par la présence d'un tube (1) d'acheminement d'eau qui est entouré, concentriquement, par un tube d'enveloppement (27) et par un tube d'enveloppement extérieur (14), et comprend deux régions séparées l'une de l'autre ; par le fait que le tube d'enveloppement extérieur (14) est perforé à sa face externe pour autoriser la pénétration, en provenance du sous-sol , d'une eau chargée de polluants ; par le fait que, par l'entremise de canaux de transfert (28), l'eau provenant de la région située entre les deux tubes d'enveloppement (14, 27) peut parvenir dans la partie inférieure de la région supérieure du tube (1) d'acheminement d'eau, au-dessous de l'extrémité inférieure d'un tube (11) d'injection gazeuse ; par le fait qu'un gaz injecté, par l'intermédiaire du tube (11) d'injection gazeuse, dans l'eau située dans le tube (1) d'acheminement d'eau, réduit le poids spécifique de l'eau et fait par conséquent monter cette dernière, de sorte qu'elle parvient dans le tube d'enveloppement (27) en traversant des perforations (8) ménagées dans la paroi du tube (1) d'acheminement d'eau, un tube (15) de sortie de gaz, intercalé entre le tube (1) d'acheminement d'eau et le tube d'enveloppement (27), ayant alors pour effets de détourner les polluants volatils séparés d'avec l'eau lors du mélange et de la ségrégation par turbulence de l'eau et du gaz, et de les diriger vers un filtre ; et par le fait que l'eau, située dans la zone comprise entre la région supérieure (en 8) du tube d'acheminement (1) et le tube d'enveloppement (27), sort en empruntant un embout tronconique (30) et parvient dans la région inférieure (en 5) du tube d'acheminement (1), à partir de laquelle elle est renvoyée dans le sous-sol à travers des perforations (5).
